# EUROPEAN PATENT SPECIFICATION

(11) **EP 0 880 653 B1**
(45) Date of publication and mention of the grant of the patent: **10.05.2000**
(21) Application number: 97902478.3
(22) Date of filing: 06.02.1997
(51) Int. Cl.: F16C 39/06

(54) **ROTOR ARRANGEMENT INCLUDING AXIAL DISPLACEMENT RATE TRANSDUCER**
ROTORANORDNUNG MIT AXIALEM WEGAUFNEHMER
SYSTEME DE ROTOR COMPRENANT UN TRANSDUCTEUR POUR LA VITESSE DE DEPLACEMENT AXIAL

(30) Priority: 24.02.1996 GB 9603966
(43) Date of publication of application: 02.12.1998
(73) Proprietor: Federal-Mogul Engineering Limited, Manchester, M22 5TN (GB)
(72) Inventor: LEUNG, Roy, Chin, Hon, East Sussex BN7 2ED (GB)
(74) Representative: Hammersley, John
(86) International application number: GB9700325
(87) International publication number: WO9731193

(56) References cited:
- EP-A- 0 019 313
- EP-A- 0 362 882
- DE-A- 1 750 602
- DE-A- 2 800 960
- FR-A- 2 163 152

## Description

This invention relates to rotor arrangements and in particular to sensing motion of a rotor along its axis of rotation by magnetic induction. It particularly, but not exclusively, relates to sensing motion of a rotating body which is actively controlled as to its axial position and wherein said motion and its determination is an element of that control.

Such a controlled rotor may comprise a shaft of a high speed turbomachine or the like, which shaft is supported as part of a electromagnet magnetic bearing arrangement, often referred to simply as a magnetic bearing.

In an axial magnetic bearing, electromagnets disposed each side of a radially extending collar secured to the shaft are capable of exerting an axially directed force thereon that is related to current flow, displacement of the rotating shaft from a predetermined position by an externally applied force is sensed to provide a control signal by which current in one or both electromagnets is varied. Furthermore, it is know to determine the rate of shaft displacement to provide better control response. An example of a magnetically suspended shaft, in which axial control involves the sensing of displacement and its rate of change, is described in US-A-3473852. However, in that arrangement the rate sensor requires to be mounted on the rotation axis of the shaft, which position is not always available, for example if the shaft carries at an end thereof a functional element, such as an impeller blade, tool holder or the like. Furthermore, such an arrangement cannot be employed satisfactorily if the shaft is capable of entering a rotation mode in which it rotates about an inertial satisfactorily if the shaft is capable of entering a rotation mode in which it rotates about an inertial axis slightly offset from the geometric axis, sometimes called whirling, not least because of the stresses imposed upon the magnetic part of the transducer.

It is known to measure the rate of displacement of a ferromagnetic body with respect to a compact velocity sensing transducer probe which comprises a permanent pick-up coil surrounding a permanent magnet and which is disposed spaced from the body by an air gap so that the flux of the magnet extends through the body and air gap and a voltage is generated across the coil proportional to the velocity at which the length of the air gap changes. Such a transducer may be disposed adjacent the end of a shaft, but difficulties are experienced if such transducer is not accurately in line with the axis of rotation of the shaft.

Although such form of transducer functions in response to changes in air gap length that are due to axial shaft displacement at any radial position with respect to the axis of rotation, it is found that for a shaft rotating at a speed in excess of 20,000 rpm (typical for a machine employing magnetic bearings), such transducer mounted off the axis of rotation by as little as 75mm has the rotating surface of the shaft end passing it at such a high translational speed that a surface irregularity which briefly varies the length of air gap by as little as 0.01 mm can generate a signal in the pick-up coil of the same order of magnitude as signals resulting from axial shaft displacements within the control bandwidth of the magnetic bearing.

Thus, the high speeds of rotation associated with the shaft (or other rotor form) of a magnetically suspended device produce such high translational speeds at the end of a shaft at any significant displacement from its actual rotation axis that has been considered to detract from using any off-axis, axially facing surface for the purpose of sensing axial displacement rate.

It is an object of the present invention to provide a rotor arrangement including transducer means for sensing rate of axial displacement of the rotor that is simple, more versatile and more stable in use than hitherto known.

According to a first aspect of the present invention a rotor arrangement comprises (i) a housing, (ii) a rotor supported in the housing for rotation about a longitudinal axis though the rotor substantially coincident with a longitudinal axis of the housing, said rotor having a shoulder feature of ferromagnetic material extending radially outwardly with respect to the longitudinal axis of the rotor and having a face exposed in an axial direction, (iii) transducer means, comprising (a) an annular, permanent magnet core extending around the housing longitudinal axis and adjacent said face of the shoulder feature, said core having at least one annular groove, open towards said face, defined between radially separated annular pole pieces that terminate in poles of opposite polarity spaced by air gaps from the face, and defining a magnetic circuit in which magnetic flux extends between the poles by way of the air gaps and shoulder feature, and (b) pick-up coil means comprising an annular pick-up coil contained in each groove, and (iv) detection means operable to detect the level of voltage induced to appear across the pick-up coil means in response to variation in the air gap.

According to a second aspect of the present invention an axial active bearing arrangement includes a rotor arrangement as defined in the preceding paragraph, axial displacement sensing means operable to determine the axial position of the rotor relative to a desired position, control means, responsive to the axial position sensing means and the transducer means of the rotor arrangement to derive a position error signal and restoring means operable to displace the rotor towards said desired position.

In this specification the term "substantially coincident" is employed on the basis that, depending upon the tolerances of construction or nature of suspension, the rotor may rotate about a rotation axis displaced from the geometric axis, about which rotation would be expected, and/or a normally coincident axis in the housing to the extent that such lack of coincidence is within the control of bearing means supporting the rotor.

Embodiments of the invention will now be described by way of example with reference to the accompanying drawings, in which :-
Figure 1 is a sectional elevation through a rotor arrangement in accordance with the present invention including a magnetically suspended shaft and an axial displacement sensing transducer and an axial displacement rate sensing transducer which co-operates with the shaft.
Figure 2 is a sectional elevation through a fragment of a rotor arrangement similar to that of Figure 1 but having a different form of axial displacement rate sensing transducer,
Figures 3(a) to 3(d) are each a schematic section elevation through a fragment of a shaft showing displacement rate transducer arrangement of Figure 1 disposed operationally with respect to shoulder features of different configurations and locations, all extending perpendicular to the shaft axis, and
Figures 4(a) to 4(c) are each a schematic sectional elevation through a fragment of a shaft showing a displacement transducer arrangement operably aligned with, and conforming with, shoulders of the shaft that are not perpendicular to shaft axis.

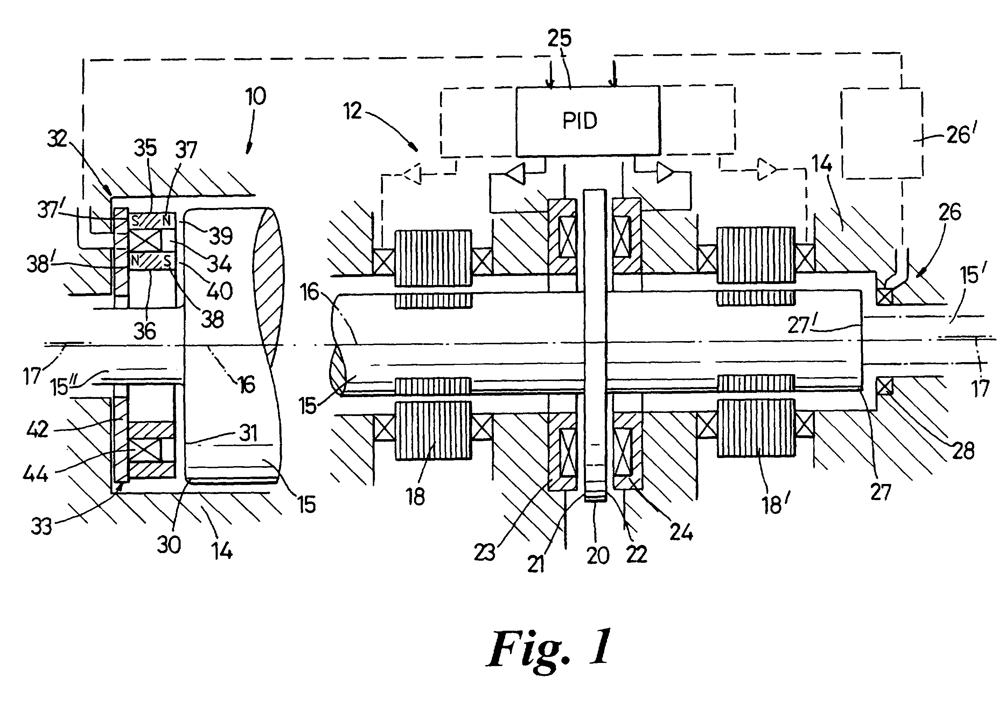

Referring to Figure 1, a rotor arrangement 10 comprises part of an active axial magnetic bearing arrangement indicated generally at 12. The rotor arrangement comprises a housing 14, a rotor 15, in the form of an elongate shaft of steel, or like ferromagnetic material, supported in the housing for rotation about a longitudinal axis 16 extending through the rotor and substantially coincidental with a longitudinal axis 17 of the housing, and transducer means, described hereinafter for sensing axial motion of the shaft.

The axial magnetic bearing 12 is in turn part of an active electromagnetic bearing arrangement for the shaft which includes also radial electromagnetic bearings 18, 18' which function to suspend the shaft in the housing without contact by responding to changes in position of the shaft (and/its axis 16) with respect to the housing.

The suspension of a shaft by radial and axial magnetic bearings is known per se and although the present invention is concerned solely with the axial bearing 12, which will be described in greater detail, it is remarked that the nature of a radial magnetic bearing and its ability to control changes in the position of the shaft means that minor discrepancies in alignment between the axis 16 and 17 are to be expected, even from a well-balanced shaft.

The axial bearing arrangement 12 comprises a collar 20 of ferromagnetic material carried by, or formed integrally with, the shaft and extending radially outwardly thereof with axially directed faces 21 and 22. Adjacent each face is an annular electromagnet 23, 24, respectively, which can apply an axially attractive force on the collar, the forces between the opposing electromagnets being balanced and varied, to overcome externally applied forces which act on the shaft, by control means 25 which dictates the level of current applied to each electromagnet. The control means 25 fundamentally responds to axial displacement of the shaft from a desired position, typically with the rotor 20 mid-way between the electromagnets 23 and 24, to vary the current in the electromagnets to restore that position.

A displacement transducer 26 is mounted in the housing disposed adjacent a shoulder 27 towards one end of the shaft, which shoulder has a radially extending face 27 from which it is spaced. The transducer comprises an annular coil 28 which surrounds the longitudinal axis 17 and is spaced therefrom to permit any extension 15' of the shaft to pass therethrough if necessary. The transducer coil 28 forms part of a tuned detection circuit, shown separately at 26' but possibly built into control means 25, which includes means for applying an oscillating signal to the transducer coil in order to generate an oscillating magnetic field that extends through the shoulder; in known manner, any variation in axial position of the shaft to and from the coil varies the state of tune and such change is detected and used as the basis for repositioning the shaft. The arrangement as thus far described is in general terms known per se, for instance from US 5027280.

However, in accordance with the conventional dosed loop control practices the control means 25 has a PID (proportional-integral-derivative) transfer function which utilises the rate of change of axial displacement to improve stability of the control.

In order to obtain a derivative term, representative of the rate of change of axial position of the shaft 15, the shaft has, towards its other end, a shoulder feature 30 extending radially outwardly, and substantially perpendicularly, with respect to the longitudinal axis 16, and the shoulder having a face 31 exposed in an axial direction.

Transducer means, indicated generally at 32, is mounted in the housing 14 and includes an annular permanent magnet core 33 extending around the housing axis 17 and spaced therefrom to permit any extension 15" of the shaft therethrough. The core 33 is disposed adjacent the shoulder face 31 and has an annular groove 34, open towards the face, which radially separates annular permanent magnet pole pieces 35, 36, which terminate in poles 37, 38 respectively, of opposite polarity to each other spaced from the shoulder face 31. The permanent magnetic pole pieces of the core define a magnetic circuit in which magnetic flux extends between the poles by way of air gaps 39, 40 and shoulder 30.

Conveniently, the magnetic pole pieces of the core comprise coaxial cylindrical magnets, one circular end of each defining a pole 37 or 38 and the other circular end 37' or 38' being coupled to an annular ferromagnetic keeper 42 which extends radially between adjacent magnets.

The transducer means includes pick-up coil means in the form of an annular pick-up coil 44, contained in annular groove 34, which coil is connected to detection means provided by control means 25.

It will be appreciated that the magnetic circuit, including the shoulder 30 and air gaps 39 and 40, is coupled magnetically to the pick-up coil 44 which effectively surrounds the pole piece 36, so that an axial displacement of the shaft (and shoulder 30 thereof) which alters the total axial length of the air gap, changes the flux level linking the coil and results in a voltage across the coil at a level proportional to the rate of change in the air gap length, that is, rate of change of shaft displacement, which the control means 25 detects and utilises in controlling the supply of restoring current to the axial electromagnets 23 and 24.

It will be seen that the annular transducer arrangement which co-operates with a rotating face of a shoulder feature in accordance with the invention is immune from the spurious signals caused in other transducers by surface irregularities without requiring access to the axis of rotation and is substantially unaffected of any offset between the longitudinal axis of the housing on which it is centred and the actual rotation axis of the shaft, whether or not the rotation axis coincides with the geometric axis, and any dynamic variation in rotation axis position that results from active control of the radial electromagnetic bearings.

It will be appreciated that variations may be affected within the scope of the invention.

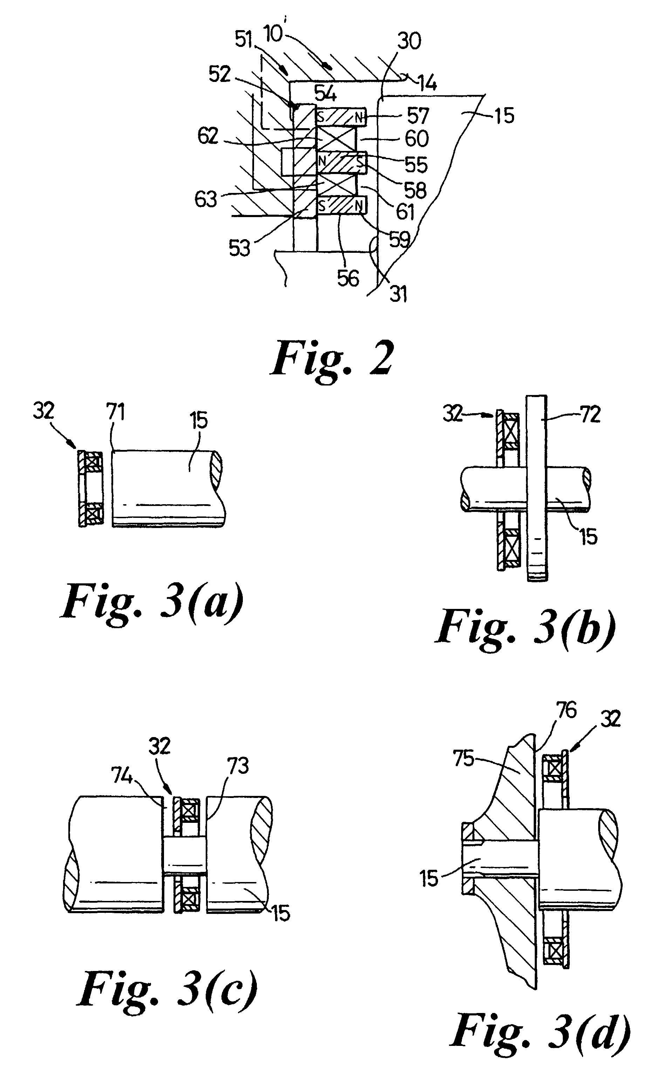

For example, referring to Figure 2, which shows a portion of a rotor arrangement 10' including a portion of shaft 15 and shoulder feature 30 with its axially facing face 31, transducer 51 comprises a magnetic core 52 having an annular keeper 53 from which extend three concentric cylindrical permanent magnets 54, 55, 56 with poles 57-59 respectively adjacent the shoulder face and adjacent poles of opposite polarity to each other. The magnets define therebetween two coaxial grooves 60,61 in each of which is disposed a pick-up coil 62,63 respectively defining the pick-up coil means. The core thus provides two magnetic circuits extending by way of the shared magnet 55, which preferably has a larger cross-sectional area than the peripheral magnets to accommodate a greater flux. The pick-up coils are wound and connected in series-aiding configuration in respect of responding to changes in flux level in the magnetic circuit due to variation in the total air gap length but series-opposing in respect of responding to any stray magnetic fields intersecting the coils, possibly from the suspension electromagnets.

It will be appreciated that the form taken by the magnetic core of the transducer may vary. For example the keeper 42 or 53 described above may comprise an annular magnet with its poles alternating radially and with the pole pieces axially extending formed from a suitable ferromagnetic material. In yet a different construction, the individual magnet pole pieces associated with each groove may comprise a single body formed around the groove. Alternatively, in the core 52, the pole piece 55 alone may comprise a permanent magnet and the peripheral pieces may be ferromagnetic bodies, or vice versa.

It will be appreciated that the transducer means may comprise more than two radially disposed grooves, in dependence on the radial extent of the shoulder feature with which to co-operate, and/or such grooves need not share a pole piece, that is the magnetic circuits are separate.

It will also be appreciated that the shoulder feature, provided it is of ferromagnetic material, may be formed other than towards one the end of a shaft, being, for example, as shown schematically in Figures 3(a) to 3(d).

In Figure 3(a) the shoulder feature is shown at an end 71 of a shaft 15, in Figure 3(b) the shoulder feature is formed by a radially extending collar 72, integral with the shaft or affixed thereto, possibly as used for the axial bearing, in Figure 3(c) is formed by one wall 73 of an annular recess 74 in the shaft, and in Figure 3(d) the shoulder feature is provided by a functional element 75, such as an impeller, carried by the shaft 15, provided the element extends radially and presents a surface 76 having an axial exposure. This latter Figure also shows that the directional orientation of the pole pieces and any groove of the transducer 32 is a matter of choice and depends upon the orientation of the exposed face of the shoulder feature.

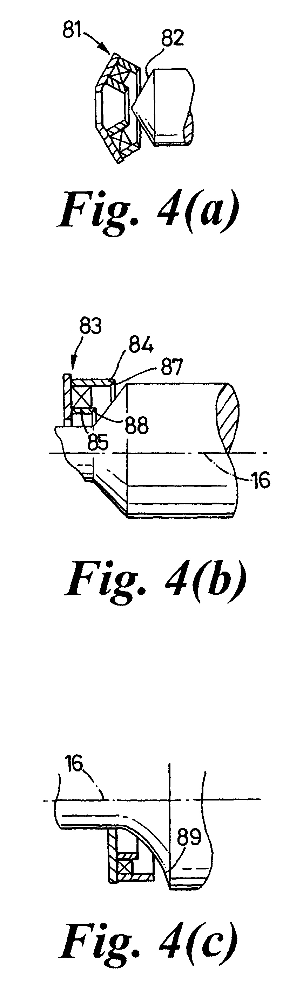

As shown schematically in Figures (4) to 4(c), the shoulder feature need not have the face extending perpendicularly to the longitudinal axis of the shaft but may be inclined thereto linearly or curvilinearly, notwithstanding that as a result any axial displacement of the shaft will result in a less than maximum axial component of variation in air gap between the transducer pole pieces and shoulder faces. In such circumstances the annular transducer may take on a conical configuration as shown in Figure 4(a) at 81 so that in cross-section it remains parallel to the face 82 of the shoulder feature, or, based on a radially planar keeper as shown in Figure 4(b) at 83, it may have pole pieces 84, 85 of different axial lengths. Also, the poles 87, 88 of the permanent magnet pole pieces may be cut obliquely to their axial lengths so as to be parallel to the adjacent surface of the shoulder feature. Furthermore, as shown in Figure 4(c) the face 89 of the shoulder feature may curve away from the axis 16 of the shaft.

Although the above description has concentrated on an arrangement including a rotor in the form of a shaft, or element carried by such shaft, suspended by magnetic bearing means, it will be appreciated that the rotor may take a form other than a shaft and/or may be supported by other bearing means. Likewise, the rate of axial displacement may be sensed and utilised for purposes other than restoring the position in an actually controlled axial bearing arrangement.

## Claims

1. A rotor arrangement (10; 10') comprising a housing (14), a rotor (15) supported in the housing for rotation about a longitudinal axis (16) though the rotor substantially coincident with a longitudinal axis of the housing, said rotor having a shoulder feature (30; 71; 72; 74; 75) of ferromagnetic material extending radially outwardly with respect to the longitudinal axis of the rotor and having a face (31; 73; 76; 82; 89) exposed in an axial direction, and means (32, 25) for determining rate of axial displacement of the rotor, characterised in that the means for determining the rate of axial displacement of the rotor comprises
(i) displacement rate transducer means, comprising (a) an annular permanent magnet core (33; 52) extending around the housing longitudinal axis and adjacent said face of the shoulder feature, said core having at least one annular groove (34; 60, 61), open towards said face, defined between radially separated annular pole pieces (35, 36; 54-56; 84, 85) that terminate in poles (37, 38; 57-59; 87, 88) of opposite polarity spaced by air gaps (39, 40) from the face, and defining a magnetic circuit in which magnetic flux extends between the poles by way of the air gaps and shoulder feature, and (b) pick-up coil means (44; 62, 63) comprising an annular pick-up coil contained in each groove, and
(ii) detection means (25) operable to detect the level of voltage induced to appear across the pick-up coil means in response to variation in the air gap.

2. A rotor arrangement as claimed in claim 1 characterised in that the face (31; 73; 76) of the shoulder feature (30; 71; 74; 75) extends radially in a plane substantially perpendicular to the longitudinal axis (16) of the rotor.

3. A rotor arrangement as claimed in claim 1 or claim 2 characterised in that the face of the shoulder feature (71) is defined by an end of the rotor and extends through the longitudinal axis.

4. A rotor arrangement as claimed in claim 1 or claim 2 characterised in that the shoulder feature is defined by a functional element (75) secured to, and surrounding, a shaft (15).

5. A rotor arrangement (10') as claimed in any one of the preceding claims characterised in that the transducer means (51) comprises at least two annular grooves (60, 61) and the pole piece (55) between them is common to the magnetic circuits defined by each said groove.

6. A rotor arrangement as claimed in claim 5 characterised in that each pair of adjacent grooves (60, 61) contain pick-up coils (62,63) wound and connected in series-aiding configuration in respect of responding to changes in flux level in the magnetic circuit but series-opposing configuration in respect of responding to magnetic fields intersecting the coils.

7. A rotor arrangement as claimed in any one of the preceding claims characterised in that the pole pieces of the core (35, 36; 54-56) comprise a plurality of coaxial annular permanent magnets with one circular end of each defining a said pole (37, 38; 57-59) and the other circular end (37', 38') being coupled to an annular ferromagnetic keeper (42; 53) extending radially between adjacent magnets.

8. An axial active bearing arrangement (12) comprising a rotor arrangement (10) having a housing and a rotor supported in the housing for rotation about a longitudinal axis of the housing, axial displacement sensing means operable to determine the axial position of the rotor relative to a desired position, control means, responsive to the axial displacement sensing means of the rotor arrangement to derive position restoring signals and restoring means responsive to the control means to displace the rotor towards said desired position, and characterised by the rotor arrangement being as claimed in any one of the preceding claims and by the control means being responsive also to said displacement rate transducer means thereof to derive said position restoring signals.

## Patentansprüche

1. Rotoranordnung (10; 10'), umfassend ein Gehäuse (14), einen Rotor (15), der in dem Gehäuse zur Rotation um eine Längsachse (16) durch den Rotor, welche im wesentlichen mit einer Längsachse des Gehäuses zusammenfällt, abgestützt ist, welcher Rotor ein Schulterelement (30; 71; 74; 75) aus ferromagnetischem Material aufweist, das sich radial nach außen in bezug auf die Längsachse des Rotors erstreckt und eine Fläche bzw. Stirnfläche (31; 73; 76; 82; 89) aufweist, die in einer axialen Richtung angeordnet ist, und Einrichtungen bzw. Mittel (32, 25) zum Bestimmen der Rate bzw. des Weges der axialen Verlagerung des Rotors, dadurch gekennzeichnet, daß die Einrichtungen zum Bestimmen der Rate der axialen Verlagerung des Rotors umfassen:
(i) Verschiebungsweg-Aufnehmereinrichtungen, umfassend (a) einen ringförmigen Permanentmagnetkern (33; 52), der sich rund um die Gehäuselängsachse und benachbart der Stirnfläche des Schulterelements erstreckt, welcher Kern wenigstens eine ringförmige, zu der Stirnfläche offene Vertiefung bzw. Rille (34; 60; 61) aufweist, die zwischen radial voneinander getrennten, ringförmigen Polstücken (35, 36; 54-56; 84, 86) definiert ist, welche in Polen (37, 38; 57-59; 87, 88) von entgegengesetzter Polarität enden, die durch Luftspalte (39, 40) von der Stirnfläche getrennt sind, und einen magnetischen Kreislauf, in welchem der magnetische Fluß sich zwischen den Polen über die Luftspalte und das Schulterelement erstreckt, definieren und (b) Aufnahmespuleneinrichtungen (44; 62, 63), die eine ringförmige, in jeder Vertiefung enthaltene Aufnahmespule umfassen, und
(ii) Detektionsmittel (25), die betätigbar sind, um das Ausmaß der Spannung zu detektieren, die für ein Auftreten über die Aufnahmespuleneinrichtungen in Antwort auf eine Änderung in dem Luftspalt induziert wird.

2. Rotoranordnung nach Anspruch 1, dadurch gekennzeichnet, daß die Stirnfläche (31; 73; 76) des Schulterelements (30; 71; 76; 75) sich radial in einer im wesentlichen senkrecht auf die Längsachse (16) des Rotors erstreckenden Ebene erstreckt.

3. Rotoranordnung nach Anspruch 1 oder 2, dadurch gekennzeichnet, daß die Stirnfläche des Schulterelements (71) durch ein Ende des Rotors definiert ist und sich durch die Längsachse erstreckt.

4. Rotoranordnung nach Anspruch 1 oder 2, dadurch gekennzeichnet, daß das Schulterelement durch ein funktionelles Element (75), das an einer Welle (25) festgelegt ist und diese umgibt, definiert ist.

5. Rotoranordnung (10') nach einem der vorhergehenden Ansprüche, dadurch gekennzeichnet, daß die Aufnehmereinrichtungen (51) wenigstens zwei ringförmige Vertiefungen (60, 61) umfassen und das Polstück (55) zwischen diesen den durch jede Vertiefung definierten, magnetischen Kreisläufen gemeinsam ist.

6. Rotoranordnung nach Anspruch 5, dadurch gekennzeichnet, daß jedes Paar von benachbarten Vertiefungen (60, 61) Aufnahmespulen (62, 63) aufweist, die gewickelt sind und in einer Konfiguration gleichsinnig in Reihe in bezug auf Antworten auf Änderungen des Flußniveaus in dem magnetischen Kreislauf, jedoch in einer Konfiguration gegeneinander in Reihe in bezug auf Antworten auf magnetische Felder, die die Spulen schneiden, verbunden sind.

7. Rotoranordnung nach einem der vorhergehenden Ansprüche, dadurch gekennzeichnet, daß die Polstücke des Kerns (35, 36; 54-56) eine Mehrzahl von koaxialen, ringförmigen Permanentmagneten umfaßt, wobei jeweils ein kreisförmiges Ende einen derartigen Pol (37, 38; 57-59) definiert und das andere kreisförmige Ende (37', 38') an einen ringförmigen, ferromagnetischen Anker (42; 53) gekoppelt ist, der sich radial zwischen benachbarten Magneten erstreckt.

8. Axial wirksame Lageranordnung (12), umfassend eine Rotoranordnung (10) mit einem Gehäuse und einem in dem Gehäuse zur Rotation um eine Längsachse des Gehäuses abgestützten Rotor, Abtastmittel für eine axiale Verlagerung, die betätigbar sind, um die axiale Position des Rotors relativ zu einer gewünschten Position zu bestimmen, Steuer- bzw. Regelmittel, die auf Abtastmittel für die axiale Verlagerung der Rotoranordnung ansprechen, um Positionswiederherstellungssignale abzuleiten, und Wiederherstellungsmittel, die auf die Steuer- bzw. Regelmittel ansprechen, um den Rotor in Richtung der gewünschten Position zu verlagern, und gekennzeichnet durch die Rotoranordnung, die in einem der vorhergehenden Ansprüche beansprucht ist und durch die Steuer- bzw. Regelmittel, die auch auf die Verschiebungsweg-Aufnehmereinrichtungen desselben ansprechen, um die Positionswiederherstellungssignale abzuleiten.

## Revendications

1. Agencement de rotor (10, 10') comprenant un logement (14), un rotor (15) supporté dans le logement pour rotation autour d'un axe longitudinal (16) nonobstant le rotor sensiblement coïncident avec un axe longitudinal du logement, ledit rotor comportant une caractéristique d'épaulement (30 ; 71 ; 72 ; 74 ; 75) de matériau ferromagnétique s'étendant radialement vers l'extérieur par rapport à l'axe longitudinal du rotor et comportant une face (31 ; 73 ; 76 ; 82 ; 89) exposée dans une direction axiale, et un moyen (32, 25) pour déterminer la vitesse de déplacement axial du rotor, caractérisé en ce que le moyen pour déterminer la vitesse de déplacement axial du rotor comprend :
(i) un moyen de transducteur de vitesse de déplacement, comprenant (a) un noyau magnétique permanent annulaire (33 ; 52) s'étendant autour de l'axe longitudinal de logement et adjacent à ladite face de la caractéristique d'épaulement, ledit noyau comportant au moins une gorge annulaire (34 ; 60, 61), ouverte vers ladite face, définie entre des pièces polaires annulaires séparées radialement (35, 36 ; 54-56 ; 84, 85) qui se terminent en des pôles (37, 38 ; 57-59 ; 87, 88) de polarité opposée espacés par des entrefers (39, 40) de la face, et définissant un circuit magnétique dans lequel le flux magnétique s'étend entre les pôles au moyen des entrefers et de la caractéristique d'épaulement, et (b) un moyen de bobine de captage (44 ; 62, 63) comprenant une bobine de captage annulaire contenue dans chaque gorge, et
(ii) un moyen de détection (25) adapté à détecter le niveau de tension amené à apparaître à travers le moyen de bobine de captage en réponse à une variation dans l'entrefer.

2. Agencement de rotor selon la revendication 1, caractérisé en ce que la face (31 ; 73 ; 76) de la caractéristique d'épaulement (30 ; 71 ; 74 ; 75) s'étend radialement dans un plan sensiblement perpendiculaire à l'axe longitudinal (16) du rotor.

3. Agencement de rotor selon la revendication 1 ou la revendication 2, caractérisé en ce que la face de la caractéristique d'épaulement (71) est définie par une extrémité du rotor et s'étend à travers l'axe longitudinal.

4. Agencement de rotor selon la revendication 1 ou la revendication 2, caractérisé en ce que la caractéristique d'épaulement est définie par un élément fonctionnel (75) fixé à, et entourant, un arbre (15).

5. Agencement de rotor (10') selon l'une quelconque des revendications précédentes, caractérisé en ce que le moyen de transducteur (51) comprend au moins deux gorges annulaires (60, 61) et la pièce polaire (55) entre elles est commune aux circuits magnétiques définis par chacune desdites gorges.

6. Agencement de rotor selon la revendication 5, caractérisé en ce que chaque paire de gorges adjacentes (60, 61) renferme des bobines de captage (62, 63) enroulées et reliées en une configuration en série dans le même sens sous le rapport d'une réponse à des changements de niveau de flux dans le circuit magnétique mais en une configuration en série en sens inverse sous le rapport d'une réponse à des champs magnétiques entrecoupant les bobines.

7. Agencement de rotor selon l'une quelconque des revendications précédentes, caractérisé en ce que les pièces polaires du noyau (35, 36 ; 54-56) comprennent une pluralité d'aimants permanents annulaires coaxiaux avec une extrémité circulaire de chacun définissant un dit pôle (37, 38 ; 57-59) et l'autre extrémité circulaire (37', 38') étant couplée à une armature ferromagnétique annulaire (42 ; 53) s'étendant radialement entre des aimants adjacents.

8. Agencement de palier axial actif (12) comprenant un agencement de rotor (10) comportant un logement et un rotor supporté dans le logement pour rotation autour d'un axe longitudinal du logement, un moyen de détection de déplacement axial adapté à déterminer la position axiale du rotor relativement à une position souhaitée, un moyen de commande, répondant au moyen de détection de déplacement axial de l'agencement de rotor pour dériver des signaux de restauration de position et un moyen de restauration répondant au moyen de commande pour déplacer le rotor vers ladite position souhaitée et caractérisé par l'agencement de rotor étant selon l'une quelconque des revendications précédentes et par le moyen de commande répondant également à son moyen de transducteur de vitesse de déplacement pour dériver lesdits signaux de restauration de position.
